# EUROPEAN PATENT APPLICATION

(11) **EP 4 116 734 A1**
(43) Date of publication of application: **11.01.2023**
(21) Application number: 22182496.4
(22) Date of filing: 01.07.2022
(51) Int. Cl.: G01S 7/536, G01S 15/32, G01S 15/34, G01S 15/87, G01S 15/931

(54) **OBJECT DETECTION SYSTEM AND OBJECT DETECTION DEVICE**

(30) Priority: 07.07.2021 JP 2021113070
(71) Applicant: AISIN CORPORATION, Kariya, Aichi 448-8650 (JP)
(72) Inventor: SUGAE, Ippei, Kariya, 448-8650 (JP); INABA, Hisashi, Kariya, 448-8650 (JP)
(74) Representative: TBK

(57) **Abstract**

An object detection system includes a plurality of object detection devices (200) disposed at predetermined intervals. Each object detection device includes a transmission unit (401, 403, 405) configured to transmit a transmission wave on which frequency modulation based on chirp signals that change in a frequency pattern different from that of an initial signal is performed subsequently to frequency modulation based on the initial signal so as to be in a mode different from those in the object detection devices including the adjacent object detection devices, a reception unit (402, 404, 406) configured to receive a reception wave as the transmission wave returned in response to reflection on an object (O), and a detection processing unit (429) configured to detect information related to the object based on information acquired as a result of transmission and reception of the transmission wave and the reception wave.

## Description

### TECHNICAL FIELD

This disclosure relates to an object detection system and an object detection device.

### BACKGROUND DISCUSSION

In related art, there is known a technique of detecting information related to an object, such as a distance to the object, by transmitting an ultrasonic wave as a transmission wave and receiving a reception wave as the transmission wave reflected and returned from the object.

Examples of the related art include WO 2019-065282A (Reference 1).

In the technique of the related art as described above, a system provided with a plurality of object detection devices for detecting the information related to the object may be implemented. In such a system, in order to more specifically detect the information related to the object, transmission waves may be transmitted substantially simultaneously (simultaneously and concurrently) from the plurality of object detection devices, respectively. In this case, in order to prevent interference and the like, it is desirable to improve identifiability of the transmission waves.

A need thus exists for an object detection system and an object detection device capable of improving the identifiability of the transmission waves.

### SUMMARY

According to an aspect of this disclosure, an object detection system includes a plurality of object detection devices disposed at predetermined intervals. Each of the plurality of object detection devices includes: a transmission unit configured to transmit, substantially simultaneously with the other object detection devices, a transmission wave on which frequency modulation based on a plurality of chirp signals that change in a frequency pattern different from that of an initial signal is performed subsequently to frequency modulation based on the initial signal having a frequency pattern in which an amplitude equal to or greater than a predetermined value is obtained in a predetermined period so as to be in a mode different from those in the object detection devices including the adjacent object detection devices; a reception unit configured to receive a reception wave as the transmission wave returned in response to reflection on an object, and a detection processing unit configured to detect information related to the object based on information acquired as a result of transmission and reception of the transmission wave and the reception wave. According to this configuration, for example, after the transmission wave is modulated to a predetermined amplitude or more, the modulation based on the chirp signals is performed. At this time, the frequency modulation is performed in a mode different from those in the object detection devices including the adjacent object detection devices. As a result, due to the modulation to the predetermined amplitude or more, an identification effect based on the chirp signals can be effectively used from the start of the frequency modulation based on the chirp signals in the reception wave, and an SN ratio can be improved. In addition, the frequency modulation is performed in a mode different from those in the object detection devices including the adjacent object detection devices, and thus it is possible to improve identifiability of the transmission wave (reception wave).

In addition, the chirp signal that changes in a frequency pattern different from that of the initial signal of the above object detection system may be a pattern in which a frequency monotonically increases or decreases. According to this configuration, for example, it is possible to easily improve the identifiability of the transmission wave (reception wave) by two chirp signals having simple waveforms.

In addition, for example, the transmission unit of the above object detection system may perform the frequency modulation based on the chirp signals to have different frequency patterns in the respective plurality of object detection devices. According to this configuration, for example, it is possible to further improve the identifiability of the plurality of object detection devices.

In addition, for example, the initial signal of the above object detection system may be subjected to the frequency modulation, so that a frequency becomes a resonance frequency of a microphone of the object detection device. According to this configuration, for example, it is possible to transmit a transmission wave based on the chirp signals in a state where an amplitude of the transmission wave is efficiently increased, and it is possible to effectively improve the SN ratio by a coding gain.

According to another aspect of this disclosure, an object detection device includes: a transmission unit configured to transmit, substantially simultaneously with other object detection devices, a transmission wave on which frequency modulation based on a plurality of chirp signals that change in a frequency pattern different from that of an initial signal is performed subsequently to frequency modulation based on the initial signal having a frequency pattern in which an amplitude equal to or greater than a predetermined value is obtained in a predetermined period so as to be in a mode different from those in the object detection devices including the adjacent object detection devices; a reception unit configured to receive a reception wave as the transmission wave returned in response to reflection on an object, and a detection processing unit configured to detect information related to the object based on information acquired as a result of transmission and reception of the transmission wave and the reception wave. According to this configuration, for example, after the transmission wave is modulated to a predetermined amplitude or more, the modulation based on the chirp signals is performed. At this time, the frequency modulation is performed in a mode different from those in the object detection devices including the adjacent object detection devices. As a result, due to the modulation to the predetermined amplitude or more, an identification effect based on the chirp signals can be effectively used from the start of the frequency modulation based on the chirp signals in the reception wave, and the SN ratio can be improved. In addition, the frequency modulation is performed in a mode different from those in the object detection devices including the adjacent object detection devices, and thus it is possible to improve the identifiability of the transmission wave (reception wave).

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exemplary and schematic diagram showing an appearance of a vehicle including an object detection system according to an embodiment when viewed from above;
Fig. 2 is an exemplary and schematic block diagram showing schematic hardware configurations of an electronic control unit (ECU) and an object detection device of the object detection system according to the embodiment;
Fig. 3 is an exemplary and schematic diagram for illustrating an outline of a technique used by the object detection device according to the embodiment to detect a distance to an object;
Fig. 4 is an exemplary and schematic block diagram showing a detailed configuration of the object detection device according to the embodiment;
Fig. 5 is an exemplary and schematic diagram showing a transmission chirp modulation pattern of the object detection system according to the embodiment;
Fig. 6 is an exemplary and schematic diagram showing different transmission chirp modulation patterns used when transmission waves are simultaneously transmitted from a plurality of object detection devices in the object detection system according to the embodiment; and
Fig. 7 is an exemplary and schematic flowchart showing a series of processing executed by the object detection system according to the embodiment to detect a distance to an object.

### DETAILED DESCRIPTION

Hereinafter, an embodiment and a modification disclosed in the present disclosure will be described with reference to the drawings. Configurations of the embodiment and the modification described below and actions and effects provided by the configurations are merely examples, and are not limited to the following description.

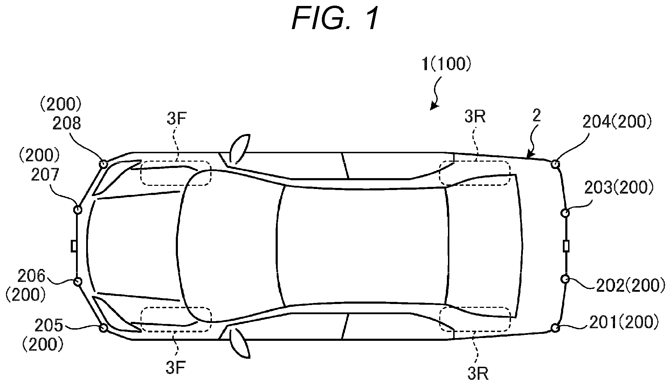

Fig. 1 is an exemplary and schematic diagram showing an appearance of a vehicle 1 including an object detection system according to an embodiment when viewed from above.

As shown in Fig. 1, the object detection system includes an electronic control unit (ECU) 100 mounted inside the four-wheel vehicle 1 including a pair of front wheels 3F and a pair of rear wheels 3R, and object detection devices 201 to 208 mounted on an exterior of the vehicle 1.

In the example shown in Fig. 1, as an example, the object detection devices 201 to 204 are provided (disposed) at different positions at predetermined intervals in a vehicle width direction in, for example, a rear bumper at a rear end of a vehicle body 2 as the exterior of the vehicle 1. In addition, the object detection devices 205 to 208 are provided (disposed) at different positions at predetermined intervals in the vehicle width direction in, for example, a front bumper at a front end of the vehicle body 2.

Here, in the present embodiment, hardware configurations and functions of the object detection devices 201 to 208 are the same as each other. Therefore, in the following description, the object detection devices 201 to 208 may be collectively referred to as an object detection device 200 for simplification. In addition, the predetermined intervals between the object detection devices 200 can be appropriately adjusted in accordance with a shape of the bumper and the like, and it is not necessary that the predetermined intervals strictly match each other. In addition, the predetermined intervals may be shifted in a vertical direction.

In the present embodiment, setting positions of the object detection devices 200 are not limited to the example shown in Fig. 1. The object detection device 200 may be provided on a side surface of the vehicle body 2 in addition to at least one of the rear bumper and the front bumper. The object detection device 200 may be provided at any position of the rear bumper, the front bumper, and the side surface. In the embodiment, the number of the object detection devices 200 is not limited to the example shown in Fig. 1. However, a technique of the embodiment is effective in a configuration in which there are a plurality of object detection devices 200.

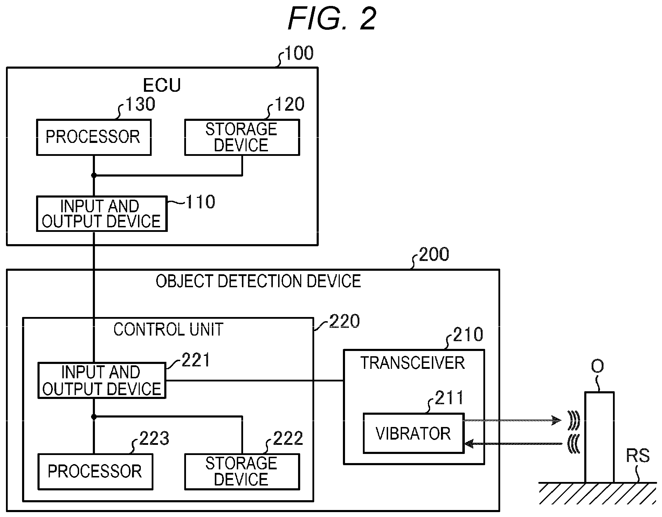

The object detection system according to the present embodiment performs transmission and reception of ultrasonic waves based on a configuration to be described below, and acquires a time difference or the like between the transmission and the reception, thereby detecting information related to an object (for example, an object O shown in Fig. 2 to be described later) including a person existing around the vehicle.

Fig. 2 is an exemplary and schematic block diagram showing hardware configurations of the ECU 100 and the object detection device 200 of the object detection system according to the embodiment.

As shown in Fig. 2, the ECU 100 has a hardware configuration same as that of a normal computer. More specifically, the ECU 100 includes an input and output device 110, a storage device 120, and a processor 130.

The input and output device 110 is an interface for implementing transmission and reception of information between the ECU 100 and an outside (the object detection device 200 in the example shown in Fig. 1).

The storage device 120 includes a main storage device such as a read only memory (ROM) or a random-access memory (RAM), and/or an auxiliary storage device such as a hard disk drive (HDD) or a solid-state drive (SSD).

The processor 130 manages various processing executed by the ECU 100. The processor 130 includes an arithmetic unit such as a central processing unit (CPU). The processor 130 reads and executes a computer program stored in the storage device 120, thereby implementing various functions such as parking assistance.

On the other hand, as shown in Fig. 2, the object detection device 200 includes a transceiver 210 and a control unit 220. With these configurations, the object detection device 200 is configured as an in-vehicle sonar as an example of an in-vehicle sensor that detects a distance to an object existing around the vehicle 1.

The transceiver 210 includes a vibrator 211 such as a piezoelectric element, and transmission and reception of ultrasonic waves are implemented by the vibrator 211.

More specifically, the transceiver 210 transmits an ultrasonic wave, as a transmission wave, generated in accordance with vibration of the vibrator 211, and receives vibration, as a reception wave, of the vibrator 211 caused by the ultrasonic wave transmitted as the transmission wave being reflected by an object existing outside and returned. In the example shown in Fig. 2, a road surface RS and the object O provided on the road surface RS are illustrated as objects that can reflect the ultrasonic wave from the transceiver 210.

In the example shown in Fig. 2, a configuration in which both the transmission of the transmission wave and the reception of the reception wave are implemented by the single transceiver 210 including the single vibrator 211 is illustrated. However, the technique of the embodiment is naturally applicable to a configuration in which a configuration on a transmission side and a configuration on a reception side are separated, for example, a configuration in which a vibrator for transmitting the transmission wave and a vibrator for receiving the reception wave are separately provided.

The control unit 220 has a hardware configuration same as that of a normal computer. More specifically, the control unit 220 includes an input and output device 221, a storage device 222, and a processor 223.

The input and output device 221 is an interface for implementing transmission and reception of information between the control unit 220 and an outside (the ECU 100 and the transceiver 210 in the example shown in Fig. 1).

The storage device 222 includes a main storage device such as a ROM or a RAM, and/or an auxiliary storage device such as an HDD or an SSD.

The processor 223 manages various processing executed by the control unit 220. The processor 223 includes an arithmetic unit, for example, a CPU. The processor 223 reads and executes a computer program stored in the storage device 222, thereby implementing various functions.

Here, the object detection device 200 according to the embodiment detects a distance to an object as information related to the object by a technique referred to as a so-called time of flight (TOF) method. As described in detail below, the TOF method is a technique of calculating a distance to an object in consideration of a difference between a timing at which the transmission wave is transmitted (more specifically, the transmission is started) and a timing at which the reception wave is received (more specifically, the reception is started).

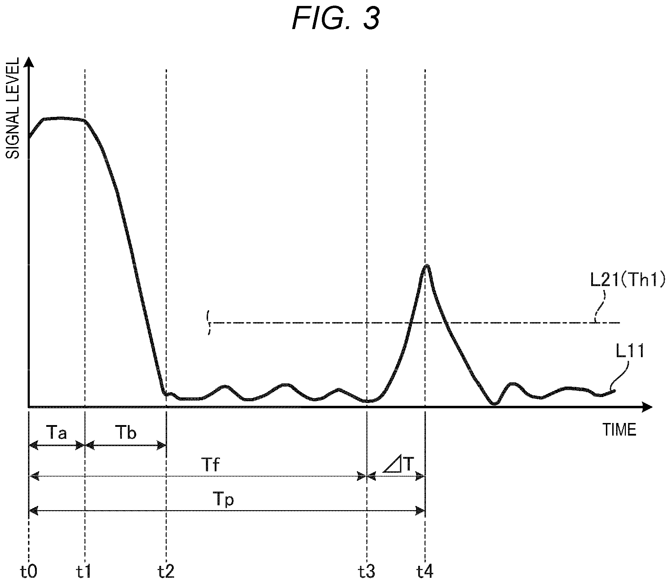

Fig. 3 is an exemplary and schematic diagram for illustrating an outline of a technique used by the object detection device 200 according to the embodiment to detect a distance to an object.

In the example shown in Fig. 3, a temporal change in a signal level (for example, amplitude) of the ultrasonic wave transmitted and received by the object detection device 200 according to the embodiment is represented in a graph form. In the graph shown in Fig. 3, a horizontal axis corresponds to a time, and a vertical axis corresponds to a signal level of a signal transmitted and received by the object detection device 200 via the transceiver 210 (the vibrator 211).

In the graph shown in Fig. 3, a solid line L11 represents an example of an envelope curve (envelope waveform) representing the temporal change in the signal level of the signal transmitted and received by the object detection device 200, that is, a degree of the vibration of the vibrator 211. Based on the solid line L11, it can be seen that by the vibrator 211 being driven and vibrating for a time Ta from a timing t0, the transmission of the transmission wave is completed at a timing t1, and then during a time Tb until a timing t2, the vibration of the vibrator 211 due to inertia continues while attenuating. Therefore, in the graph shown in Fig. 3, the time Tb corresponds to a so-called reverberation time.

The solid line L11 reaches a peak at which the degree of the vibration of the vibrator 211 exceeds (or equal to or more than) a predetermined threshold value Th1 represented by a dashed-dotted line L21 at a timing t4 at which a time Tp elapses from the timing t0 at which the transmission of the transmission wave is started. The threshold value Th1 is a value set in advance for identifying whether the vibration of the vibrator 211 is caused by reception of a reception wave as a transmission wave reflected and returned by an object to be detected (for example, the object O shown in Fig. 2) or is caused by reception of a reception wave as a transmission wave reflected and returned by an object not to be detected (for example, the road surface RS shown in Fig. 2).

Fig. 3 shows an example in which the threshold value Th1 is set as a constant value that does not change as the time elapses, but in the embodiment, the threshold value Th1 may be set as a value that changes as the time elapses.

Here, the vibration having a peak exceeding (or equal to or more than) the threshold value Th1 can be considered to be caused by the reception of the reception wave as the transmission wave reflected and returned by the object to be detected. On the other hand, the vibration having a peak equal to or lower than (or less than) the threshold value Th1 can be considered to be caused by the reception of the reception wave as the transmission wave reflected and returned by the object not to be detected.

Therefore, based on the solid line L11, it can be seen that the vibration of the vibrator 211 at the timing t4 is caused by the reception of the reception wave as the transmission wave reflected and returned by the object to be detected.

In the solid line L11, the vibration of the vibrator 211 attenuates after the timing t4. Therefore, the timing t4 corresponds to a timing at which the reception of the reception wave as the transmission wave reflected and returned by the object to be detected is completed, in other words, a timing at which the last transmission wave transmitted at the timing t1 returns as the reception wave.

Further, in the solid line L11, a timing t3 as a start point of the peak at the timing t4 corresponds to a timing at which the reception of the reception wave as the transmission wave reflected and returned by the object to be detected is started, in other words, a timing at which the first transmission wave transmitted at the timing t0 returns as the reception wave. Therefore, in the solid line L11, a time ΔT between the timing t3 and the timing t4 is equal to the time Ta as a transmission time of the transmission wave.

Based on the above, in order to obtain a distance to the object to be detected by the TOF method, it is necessary to obtain a time Tf between the timing t0 at which the transmission wave starts to be transmitted and the timing t3 at which the reception wave starts to be received. The time Tf can be obtained by subtracting the time ΔT equal to the time Ta as the transmission time of the transmission wave from the time Tp as a difference between the timing t0 and the timing t4 at which the signal level of the reception wave reaches the peak exceeding the threshold value Th1.

The timing t0 at which the transmission wave starts to be transmitted can be easily specified as a timing at which the object detection device 200 starts operating, and the time Ta as the transmission time of the transmission wave is determined in advance by setting or the like. Therefore, in order to obtain the distance to the object to be detected by the TOF method, it is important to specify the timing t4 at which the signal level of the reception wave eventually reaches the peak exceeding the threshold value Th1.

However, in the configuration in which the plurality of object detection devices 200 are provided as in the embodiment described above, in order to more specifically detect the information related to the object exists around the vehicle, transmission waves may be transmitted substantially simultaneously (simultaneously and concurrently) from each of the plurality of object detection devices 200. In this case, in order to prevent interference and the like, it is desirable to improve identifiability of the transmission waves.

Therefore, in the embodiment, the object detection device 200 is configured as follows, thereby improving the identifiability of the transmission waves.

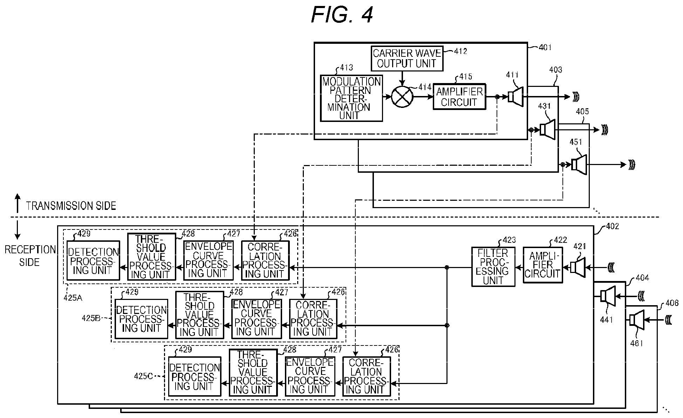

Fig. 4 is an exemplary and schematic block diagram showing a detailed configuration of the object detection device 200 according to the embodiment.

As shown in Fig. 4, in the embodiment, a plurality of (for example, three) transmission units 401, 403, and transmission unit 405 are provided as the configuration on the transmission side, and a plurality of (for example, three) reception units 402, 404, and reception unit 406 are provided as the configuration on the reception side.

Here, in Fig. 4, the configuration on the transmission side and the configuration on the reception side are illustrated in a separated state, but such an aspect shown in the drawings is merely for convenience of description. Therefore, in the example shown in Fig. 4, for example, a combination of the transmission unit 401 and the reception unit 402, a combination of the transmission unit 403 and the reception unit 404, and a combination of the transmission unit 405 and the reception unit 406 respectively constitute one object detection device 200. However, as described above, the technique of the embodiment is naturally applicable to the configuration in which the configuration on the transmission side and the configuration on the reception side are separated from each other.

In addition, in Fig. 4, three configurations on the transmission side and three configurations on the reception side are illustrated, but in the embodiment, one configuration on the transmission side and one configuration on the reception side may be further provided so as to correspond to the four object detection devices 200 shown in Fig. 1.

In the embodiment, at least a part of the configuration shown in Fig. 4 may be implemented by a result of cooperation between hardware and software, more specifically, by a result of the processor 223 of the object detection device 200 reading a computer program from the storage device 222 and executing the computer program. However, in the embodiment, at least a part of the configurations shown in Fig. 4 may be implemented by dedicated hardware (circuit: circuitry).

First, the configuration of the transmission side of the object detection device 200 will be described.

As shown in Fig. 4, the transmission unit 401 includes a wave transmitter 411, a carrier wave output unit 412, a modulation pattern determination unit 413, a multiplier 414, and an amplifier circuit 415.

The transmission units 403 and 405 include a wave transmitter 431 and a wave transmitter 451 same as the wave transmitter 411, respectively. In Fig. 4, illustration other than the wave transmitter 431 and the wave transmitter 451 is omitted for convenience of space, but the transmission unit 403 and the transmission unit 405 have the same configuration as the transmission unit 401 except for the wave transmitter 431 and the wave transmitter 451.

The wave transmitter 411 includes the above-described vibrator 211, and the vibrator 211 transmits a transmission wave corresponding to a transmission signal (after amplification) output from the amplifier circuit 415.

Here, in the embodiment, for example, under control of the ECU 100, the wave transmitter 411 is configured to transmit a transmission wave substantially simultaneously with the wave transmitter 431 and the wave transmitter 451 of the other object detection devices 200. Therefore, in the embodiment, it is necessary to assign identification information to a transmission wave in order to specify a transmission source of the transmission wave returned as the reception wave.

Therefore, in the embodiment, for example, a carrier wave such as a sine wave is modulated with a modulation pattern corresponding to the identification information to be assigned to the transmission wave, thereby generating a transmission wave encoded to include the identification information.

More specifically, the carrier wave output unit 412 outputs a carrier wave such as the sine wave, which is a source of the transmission wave. Then, the modulation pattern determination unit 413 determines the modulation pattern of the carrier wave corresponding to the identification information to be assigned to the transmission wave. Then, the multiplier 414 multiplies an output from the modulation pattern determination unit 413 and an output from the carrier wave output unit 412 to modulate the carrier wave and generate the transmission wave encoded to include the identification information.

In the embodiment, the modulation pattern of the carrier wave is determined using an initial signal and a plurality of chirp signals (for example, a first chirp signal and a second chirp signal). Here, the initial signal is a signal that can be subjected to frequency modulation so that an amplitude equal to or greater than a predetermined value is obtained in a predetermined period. In addition, the first chirp signal is, for example, a signal in which the frequency increases monotonically (more specifically, linearly) from a first frequency to a second frequency during a predetermined period and can be subjected to the frequency modulation. In addition, the second chirp signal is, for example, a signal in which the frequency decreases monotonically (more specifically, linearly) from the second frequency to the first frequency during the predetermined period and can be subjected to the frequency modulation.

A chirp signal field pattern used in the modulation pattern includes, for example, a pattern in which the second chirp signal is used subsequent to the first chirp signal, and conversely, a pattern in which the first chirp signal is used subsequent to the second chirp signal. The chirp signal field pattern used in another modulation pattern includes a pattern in which the first chirp signal is used again subsequent to the first chirp signal, a pattern in which the second chirp signal is used again subsequent to the second chirp signal, and the like. A pattern of the chirp signal used in another modulation pattern may be a combination of three or more chirp signals. When a plurality of chirp signals are combined, a plurality of chirp signals in which an upper limit frequency and/or a lower limit frequency of each chirp signal is changed or a duration is changed may be combined. In this manner, by combining the plurality of chirp signals, it is possible to easily generate a plurality of types of modulation patterns. By modulating the carrier wave using such a plurality of modulation patterns, it is possible to easily generate transmission waves having different characteristics (identifiability).

When the wave transmitter 411 transmits an ultrasonic wave, an amplitude of a surge when the transmission starts is small, and for example, the amplitude is increased by transmitting the surge many times and matching phases. Therefore, when modulation is simply performed using a chirp signal, since a frequency in a period in which the amplitude of the surge is small (a period in which the signal is weak) cannot be effectively used, an SN ratio is deteriorated, and the identifiability of the transmission wave may be deteriorated.

Therefore, in the present embodiment, the frequency modulation is irregularly performed based on the initial signal and the chirp signal to generate the transmission wave, thereby improving the SN ratio by a coding gain. Specifically, the frequency modulation (chirp) by pulse compression is irregularly varied on a time axis in accordance with an impedance characteristic of the wave transmitter 411 (microphone). For example, when the vibration (amplitude) of the wave transmitter 411 is small, chirp is not started, and first, for example, the frequency modulation based on the initial signal of the frequency pattern in which the amplitude equal to or greater than a predetermined amplitude is obtained in the predetermined period is performed. Preferably, for example, the frequency modulation is performed, so that the frequency becomes near a resonance frequency of the wave transmitter 411, and the transmission is performed. Then, after the vibration (amplitude) becomes large to some extent, the chirp is started. As a result, the surge can be effectively used from the start of the modulation by the chirp signal, and the SN ratio can be improved.

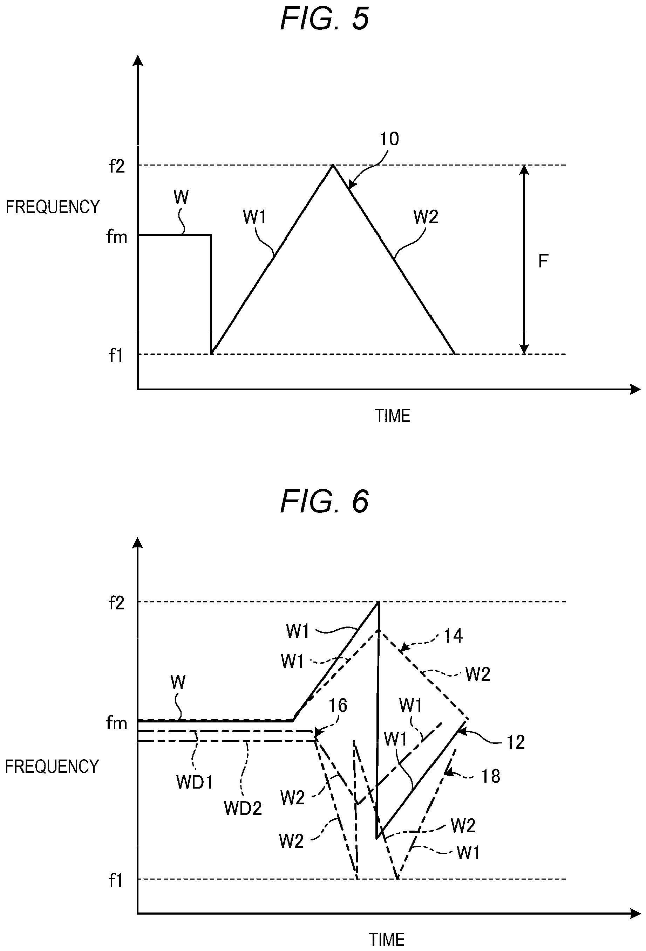

Fig. 5 is an exemplary and schematic diagram showing a transmission chirp modulation pattern 10 of the object detection system according to the embodiment.

In Fig. 5, fm is the resonance frequency of the wave transmitter 411 (microphone), f1 is a lower limit frequency of a natural frequency band F set for the wave transmitter 411, and f2 is an upper limit frequency of the frequency band F.

As described above, in the present embodiment, the frequency modulation is irregularly performed based on the initial signal and the chirp signal to generate the transmission wave. In the case of Fig. 5, which is an example of the transmission chirp modulation pattern 10, first, the modulation is performed with an initial signal W, so that a frequency becomes constant near the resonance frequency fm. Then, after the vibration (amplitude) of the transmission wave is increased to some extent, the modulation is performed by a first chirp signal W1 (up-chirp) in which the frequency monotonically increases from the lower limit frequency f1 to the upper limit frequency f2, and subsequently, the modulation is performed by a second chirp signal W2 (down-chirp) in which the frequency monotonically decreases from the upper limit frequency f2 to the lower limit frequency f1. By transmitting the transmission wave modulated by such a transmission chirp modulation pattern 10, it is possible to effectively use the surge from the start of the modulation by the chirp signal. By continuously performing the modulation using the plurality of chirp signals, it is possible to easily generate a transmission wave having high identifiability.

As shown in Fig. 1, in the case of the vehicle 1 in the present embodiment, four object detection devices 200 (201 to 204) are disposed at a rear end portion of the vehicle 1, and four object detection devices 200 (205 to 208) are disposed at a front end portion of the vehicle 1. The object detection devices 201 to 204 are disposed close to each other at predetermined intervals in the vehicle width direction, and perform transmission and reception operations. Similarly, the object detection devices 205 to 208 are disposed close to each other at the predetermined intervals in the vehicle width direction, and perform the transmission and reception operations. In this case, in order for each object detection device 200 to accurately detect whether the object O (object) is present in a transmission direction of the transmission wave and, when the object O is present, to accurately detect the distance to the object O, it is necessary to accurately grasp from which object detection device 200 the received reception wave is transmitted. In this case, the transmission wave transmitted from the object detection device 200 needs to transmit transmission waves having different characteristics at least by adjacent object detection devices 200 (on both sides).

For example, a case is considered in which the transmission wave (reception wave) is simply identified by using the modulation by the first chirp signal W1 or the second chirp signal W2. For example, it is assumed that the object detection device 205 transmits a transmission wave modulated by the first chirp signal W1, the object detection device 206 transmits a transmission wave modulated by the second chirp signal W2, the object detection device 207 transmits the transmission wave modulated by the first chirp signal W1, and the object detection device 208 transmits the transmission wave modulated by the second chirp signal W2. In this case, for example, when the object detection device 207 receives a reception wave, it is difficult to identify whether the reception wave is the transmission wave transmitted by the object detection device 206 or the transmission wave transmitted by the object detection device 208. In order to be capable of performing the identification with this configuration, for example, the object detection device 205 transmits the transmission wave modulated by the first chirp signal W1, and the object detection device 206 transmits the transmission wave modulated by the second chirp signal W2. At this time, the transmission of the transmission wave modulated by the first chirp signal W1 by the object detection device 207 and the transmission of the transmission wave modulated by the second chirp signal W2 by the object detection device 208 need to be stopped, and after the reception of the reception waves performed by the object detection device 205 and the object detection device 206 is completed, the transmission wave modulated by the first chirp signal W1 needs to be transmitted by the object detection device 207, and the transmission wave modulated by the second chirp signal W2 needs to be transmitted by the object detection device 208. That is, the object detection device 205 and the object detection device 207 cannot transmit the first chirp signal W1 at the same time, and a processing waiting time is required.

On the other hand, as in the present embodiment, after the transmission of the transmission wave modulated by the initial signal W is performed, so that the frequency is near the resonance frequency fm, the modulation using the plurality of chirp signals is continuously performed, so that the transmission waves with high identifiability can be easily transmitted by each object detection device 200 in a different mode.

For example, Fig. 6 is an exemplary and schematic diagram showing different transmission chirp modulation patterns that can be used when the transmission waves are simultaneously transmitted from the plurality of object detection devices 200.

In the case of Fig. 6, a transmission chirp modulation pattern 12 indicated by a solid line is a pattern in which the modulation by the first chirp signal W1 is performed subsequently to the modulation by the initial signal W, and the modulation by the first chirp signal W1 is performed again. In addition, a transmission chirp modulation pattern 14 indicated by a broken line is a pattern in which the modulation by the first chirp signal W1 and the second chirp signal W2 are performed subsequently to the modulation by the initial signal W. In addition, a transmission chirp modulation pattern 16 indicated by a dashed-dotted line is a pattern in which the modulation by the second chirp signal W2 and the first chirp signal W1 are performed subsequently to modulation by an initial signal WD1 having a frequency slightly lower than that of the initial signal W. In addition, a transmission chirp modulation pattern 18 indicated by a two-dot chain line is a pattern in which the modulation by the second chirp signal W2, the modulation by the second chirp signal W2 again, and the modulation by the first chirp signal W1 are performed subsequently to modulation by an initial signal WD2 having a frequency slightly lower than that of the initial signal WD1.

As described above, the adjacent object detection devices 200 can transmit transmission waves that can be easily and clearly identified by using the transmission chirp modulation patterns of different patterns as described above. As a result, the object detection devices 200 can simultaneously perform the transmission and the reception, and measurement cycles of the object detection devices 200 can be shortened. When the object O is detected using the ultrasonic waves, normally, when there is a possibility that the object O exists, the transmission and the reception are repeatedly performed many times, and a presence or absence of the object O is confirmed. As described above, in the case of the configuration according to the present embodiment, since the object detection devices 200 can transmit the transmission waves (ultrasonic waves) substantially at the same time, it is possible to shorten a confirmation time of the object O.

Returning to Fig. 4, the amplifier circuit 415 amplifies the transmission signal output from the multiplier 414 and outputs the amplified transmission signal to the wave transmitter 411. In this manner, in the embodiment, the configuration on the transmission side of the object detection device 200 transmits different transmission waves subjected to the modulation by the transmission chirp modulation patterns.

Next, the configuration on the reception side of the object detection device 200 will be described.

As shown in Fig. 4, the reception unit 402 includes a wave receiver 421, an amplifier circuit 422, a filter processing unit 423, an identification unit 424, and a plurality of (for example, three) signal processing systems 425A to 425C.

The reception unit 404 and the reception unit 406 include a wave receiver 441 and a wave receiver 461 same as the wave receiver 421, respectively. In Fig. 4, illustration other than the wave receiver 441 and the wave receiver 461 is omitted for convenience of space, but the reception unit 404 and the reception unit 406 have the same configuration as the reception unit 402 in addition to the wave receiver 441 and the wave receiver 461.

The wave receiver 421 includes the above-described vibrator 211, and the vibrator 211 receives a transmission wave reflected by an object as a reception wave.

The amplifier circuit 422 amplifies a reception signal as a signal corresponding to the reception wave received by the wave receiver 421.

The filter processing unit 423 performs filtering processing on the reception signal amplified by the amplifier circuit 422. The filtering processing includes prevention of noise, correction of Doppler shift, and the like.

Here, in the embodiment, as described above, the plurality of identifiable transmission waves are transmitted substantially simultaneously from the plurality of wave transmitters 411, 431, and the wave transmitter 451. Therefore, the reception wave received by the wave receiver 421 is formed by at least partially superimposing a plurality of surges corresponding to the plurality of transmission waves transmitted from the plurality of wave transmitters 411, 431, and the wave transmitter 451.

Therefore, in the embodiment, the same number of signal processing systems 425A to 425C as the number of wave transmitters 411, 431 and the wave transmitter 451 are provided. Each of the signal processing systems 425A to 425C includes a correlation processing unit 426, an envelope curve processing unit 427, a threshold value processing unit 428, and a detection processing unit 429. Based on these configurations, the signal processing systems 425A to 425C implement a function of specifying a relationship between a reception wave received via the wave receiver 421 and a plurality of transmission waves transmitted via the wave transmitters 411, 431, and the wave transmitter 451, and a function of detecting information related to an object based on the specified relationship.

The correlation processing unit 426 acquires a correlation value corresponding to a similarity degree of the identification information of the transmission wave and the reception wave based on the transmission signals acquired from the configuration on the transmission side and the reception signal subjected to the filtering processing by the filter processing unit 423. The correlation value is calculated based on a generally well-known correlation function or the like.

Then, the envelope curve processing unit 427 obtains an envelope curve of a waveform of a signal corresponding to the correlation value acquired by the correlation processing unit 426.

Then, the threshold value processing unit 428 compares a value of the envelope curve obtained by the envelope curve processing unit 427 with a predetermined threshold value, and determines, based on a comparison result, whether the identification information of the transmission wave and the reception wave is similar to each other at a predetermined level or higher.

Then, based on a processing result by the threshold value processing unit 428, the detection processing unit 429 specifies a timing at which the similarity degree of the identification information of the transmission wave and the reception wave has the predetermined level or higher, that is, a timing (for example, the timing t4 shown in Fig. 2) at which the signal level of the reception wave as the transmission wave returned by reflection reaches a peak exceeding the threshold value, and detects the distance to the object as the information related to the object by the TOF method.

Here, in the embodiment, the correlation processing unit 426 of the signal processing system 425A is formed to acquire the correlation value by using the transmission signal acquired from the transmission unit 401. Therefore, the correlation value acquired by the correlation processing unit 426 of the signal processing system 425A is a value reflecting a similarity to the transmission wave transmitted from the wave transmitter 411.

Similarly, the correlation processing unit 426 of the signal processing system 425B is formed to acquire the correlation value using the transmission signal acquired from the transmission unit 403, and the correlation processing unit 426 of the signal processing system 425C is formed to acquire the correlation value using the transmission signal acquired from the transmission unit 405. Therefore, the correlation value acquired by the correlation processing unit 426 of the signal processing system 425B is a value reflecting a similarity to the transmission wave transmitted from the wave transmitter 431, and the correlation value acquired by the correlation processing unit 426 of the signal processing system 425C is a value reflecting a similarity to the transmission wave transmitted from the wave transmitter 451.

Therefore, in the embodiment, the detection processing unit 429 of the signal processing system 425A specifies a timing at which the signal level of the reception wave received by the wave receiver 421 as the transmission wave transmitted from the wave transmitter 411 returns by reflection reaches the peak exceeding the threshold value. The detection processing unit 429 of the signal processing system 425B specifies a timing at which the signal level of the reception wave received by the wave receiver 421 as the transmission wave transmitted from the wave transmitter 431 returns by reflection reaches the peak exceeding the threshold value, and the detection processing unit 429 of the signal processing system 425C specifies a timing at which the signal level of the reception wave received by the wave receiver 421 as the transmission wave transmitted from the wave transmitter 451 returns by reflection reaches the peak exceeding the threshold value.

As described above, in the embodiment, the three signal processing systems 425A to 425C are used to appropriately specify the timing at which the transmission wave transmitted from the wave transmitter 411 is received by the wave receiver 421 as the transmission wave is returned by reflection, the timing at which the transmission wave transmitted from the wave transmitter 431 is received by the wave receiver 421 as the transmission wave is returned by reflection, and the timing at which the transmission wave transmitted from the wave transmitter 451 is received by the wave receiver 421 as the transmission wave is returned by reflection. Then, based on a difference of the timings of the transmission and the reception, the distance to the object can be appropriately detected.

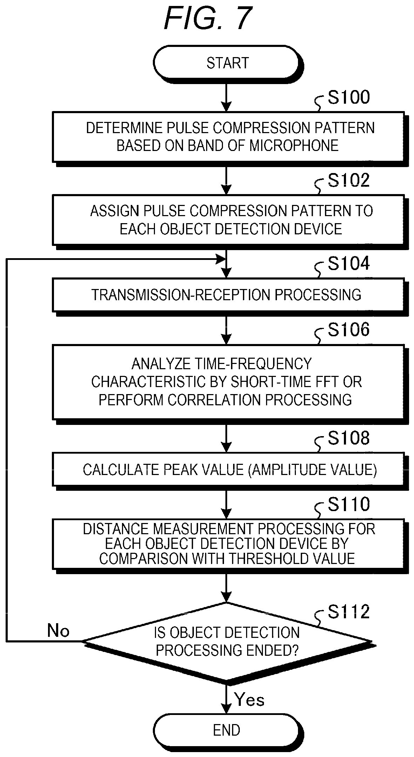

Based on the above configuration, the object detection system according to the embodiment detects information related to an object (object O) by executing processing in a flow as shown in Fig. 7.

Fig. 7 is an exemplary and schematic flowchart showing a series of processing executed by the object detection system according to the embodiment to detect a distance to an object.

First, in each object detection device 200 of the object detection system, the modulation pattern determination unit 413 determines a pulse compression pattern based on a band of a microphone (transceiver 210) (S100).

Subsequently, the determined pulse compression pattern (transmission chirp modulation pattern) is assigned to each object detection device 200 (S102), and preprocessing for object detection is completed.

Then, in each object detection device 200, the transceiver 210 executes processing of transmitting a transmission wave generated by modulating a carrier wave with the pulse compression pattern determined in S100 and receiving a reception wave as a result of the transmission wave returning by reflection by the object (S104).

Then, each object detection device 200 analyzes a time-frequency characteristic by short-time FFT or performs correlation processing of acquiring a correlation value corresponding to a similarity degree of identification information of the transmission wave and the reception wave by the correlation processing unit 426 (S106).

Then, in each object detection device 200, the envelope curve processing unit 427 calculates an envelope curve (peak value, amplitude value) of a waveform of a signal corresponding to the correlation value acquired by the correlation processing unit 426 (S108).

Then, the detection processing unit 429 executes distance measurement processing of detecting a distance to the object for each object detection device 200 based on a comparison result between the correlation value (of the envelope curve) and a threshold value (S110). Then, when a command indicating an end of object detection processing is not received (No in S112), each object detection device 200 returns to the processing of S104, executes the transmission processing and the reception processing of the transmission wave (surge modulated by the transmission chirp modulation pattern) at a predetermined cycle, and repeats the subsequent processing. When the command indicating the end of the object detection processing is received in S112 (Yes in S112), for example, when an ignition switch or the like of the vehicle 1 is turned off, the processing of this flow is temporarily ended.

As described above, the object detection system according to the embodiment includes the plurality of object detection devices 200. Therefore, the plurality of object detection devices 200 have the same configuration, and execute the processing according to the flowchart of Fig. 7 substantially at the same time.

For example, in the embodiment, one of the plurality of object detection devices 200 includes the transmission unit 401, the reception unit 402, and the detection processing unit 429. The transmission unit 401 transmits, substantially simultaneously with the other object detection devices 200, a transmission wave on which the frequency modulation based on a plurality of chirp signals (W1 and W2) that change in a frequency pattern different from that of the initial signal W is performed subsequently to the frequency modulation based on the initial signal W having a frequency pattern in which the amplitude equal to or greater than the predetermined value is obtained in the predetermined period so as to be in a mode different from those in the object detection devices 200 including the adjacent object detection devices 200. The reception unit 402 receives the reception wave as the transmission wave returned in response to the reflection on the object. The detection processing unit 429 detects the information related to the object based on information acquired as a result of transmission and reception of the transmission wave and the reception wave.

According to the above-described configuration, for example, after the transmission wave is modulated to a predetermined amplitude or more, the modulation based on the chirp signals is performed. At this time, the frequency modulation is performed in a mode different from those in the object detection devices 200 including the adjacent object detection devices 200. That is, the frequency modulations are different between or among the object detection devices 200 including the adjacent object devices 200. As a result, due to the modulation to the predetermined amplitude or more, an identification effect based on the chirp signals can be effectively used from the start of the frequency modulation based on the chirp signals in the reception wave, and the SN ratio can be improved. In addition, the frequency modulation is performed in a mode different from those in the object detection devices 200 including the adjacent object detection devices 200, and thus it is possible to improve the identifiability of the transmission wave (reception wave). As a result, in an environment in which a low speed safe driving assistance device of the vehicle 1 is used, collision avoidance from a long distance and collision avoidance immediately before a collision are facilitated. In addition, since the transmission and the reception are performed only by the frequency modulation, a circuit scale is smaller than that in combination with other modulation methods, and cost reduction can be achieved.

As shown in Fig. 5, the chirp signal that changes in a frequency pattern different from that of the above-described initial signal may be, for example, the first chirp signal W1 in which the frequency monotonically increases or the second chirp signal W2 in which the frequency monotonically decreases. According to this configuration, for example, it is possible to easily improve the identifiability of the transmission wave (reception wave) by two chirp signals having simple waveforms.

In addition, for example, the transmission unit 401 described above may perform the frequency modulation based on the chirp signals to have different frequency patterns in the respective plurality of object detection devices 200. According to this configuration, for example, it is possible to further improve the identifiability of the plurality of object detection devices 200. For example, in Fig. 1, by performing directivity adjustment of the object detection devices 200, a reflected wave (reception wave) of the transmission wave transmitted from the object detection device 205 can be received only by the object detection device 205 and the object detection device 206. In addition, a reflected wave (reception wave) of the transmission wave transmitted from the object detection device 208 can be received only by the object detection device 207 and the object detection device 208. In this case, the transmission wave of the object detection device 207 is not received by the object detection device 205. Similarly, the transmission wave of the object detection device 206 is not received by the object detection device 208. In such a case, the object detection device 205 and the object detection device 208 may transmit transmission waves by modulation based on the same transmission chirp modulation pattern. In this case, it is possible to reduce the number of patterns and to contribute to simplification of control, as compared with a case where transmission waves are transmitted by modulation based on different transmission chirp modulation patterns for all of the transmission waves.

For example, the initial signal described above may be subjected to the frequency modulation, so that the frequency becomes the resonance frequency of the transmission unit 401 of the object detection device 200. According to this configuration, for example, it is possible to transmit the transmission wave modulated based on the chirp signals in a state where the amplitude of the transmission wave is efficiently increased, and it is possible to effectively improve the SN ratio by the coding gain.

In the above-described embodiment, the technique disclosed here is applied to a configuration in which information related to an object is detected by transmission and reception of ultrasonic waves, but the technique disclosed here can also be applied to a configuration in which information related to an object is detected by transmission and reception of sound waves, millimeter waves, electromagnetic waves, or the like as surges other than the ultrasonic waves.

In addition, in the above-described embodiment, a configuration in which a distance to the object is detected as the information related to the object is exemplified, but the technique disclosed here can also be applied to a configuration in which only a presence or absence of the object is detected as the information related to the object.

An object detection system includes a plurality of object detection devices (200) disposed at predetermined intervals. Each object detection device includes a transmission unit (401, 403, 405) configured to transmit a transmission wave on which frequency modulation based on chirp signals that change in a frequency pattern different from that of an initial signal is performed subsequently to frequency modulation based on the initial signal so as to be in a mode different from those in the object detection devices including the adjacent object detection devices, a reception unit (402, 404, 406) configured to receive a reception wave as the transmission wave returned in response to reflection on an object (O), and a detection processing unit (429) configured to detect information related to the object based on information acquired as a result of transmission and reception of the transmission wave and the reception wave.

## Claims

1. An object detection system comprising:
a plurality of object detection devices (200) disposed at predetermined intervals, wherein
each of the plurality of object detection devices includes
a transmission unit (401, 403, 405) configured to transmit, substantially simultaneously with the other object detection devices, a transmission wave on which frequency modulation based on a plurality of chirp signals that change in a frequency pattern different from that of an initial signal is performed subsequently to frequency modulation based on the initial signal having a frequency pattern in which an amplitude equal to or greater than a predetermined value is obtained in a predetermined period so as to be in a mode different from those in the object detection devices including the adjacent object detection devices,
a reception unit (402, 404, 406) configured to receive a reception wave as the transmission wave returned in response to reflection on an object (O), and
a detection processing unit (429) configured to detect information related to the object based on information acquired as a result of transmission and reception of the transmission wave and the reception wave.

2. The object detection system according to claim 1, wherein the chirp signal that changes in a frequency pattern different from that of the initial signal is a pattern in which a frequency monotonically increases or decreases.

3. The object detection system according to claim 1 or 2, wherein the transmission unit performs the frequency modulation based on the chirp signals to have different frequency patterns in the respective plurality of object detection devices.

4. The object detection system according to any one of claims 1 to 3, wherein the initial signal is subjected to the frequency modulation so that a frequency becomes a resonance frequency (fm) of a microphone of the object detection device.

5. An object detection device (200) comprising:
a transmission unit (401, 403, 405) configured to transmit, substantially simultaneously with other object detection devices, a transmission wave on which frequency modulation based on a plurality of chirp signals that change in a frequency pattern different from that of an initial signal is performed subsequently to frequency modulation based on the initial signal having a frequency pattern in which an amplitude equal to or greater than a predetermined value is obtained in a predetermined period so as to be in a mode different from those in the object detection devices including the adjacent object detection devices;
a reception unit (402, 404, 406) configured to receive a reception wave as the transmission wave returned in response to reflection on an object (O); and
a detection processing unit (429) configured to detect information related to the object based on information acquired as a result of transmission and reception of the transmission wave and the reception wave.
